# EUROPÄISCHE PATENTSCHRIFT

(11) **EP 2 233 757 B1**
(45) Veröffentlichungstag und Bekanntmachung des Hinweises auf die Patenterteilung: **30.08.2017**
(21) Anmeldenummer: 10156163.7
(22) Anmeldetag: 11.03.2010
(51) Int. Cl.: F16B 25/00

(54) **Verfahren zur Verankerung eines Befestigungselementes in einem mineralischen Bauteil**
Method for anchoring a mounting element in a mineral component
Procédé d'ancrage d'un élément de fixation dans un composant minéral

(30) Priorität: 24.03.2009 DE 102009001815
(43) Veröffentlichungstag der Anmeldung: 29.09.2010
(73) Patentinhaber: HILTI Aktiengesellschaft, 9494 Schaan (LI)
(72) Erfinder: Bianchi, Pietro, 9473, Gams (CH); Sander, Bernhard, 81379, München (DE); Rosenkranz, Falk, 9658, Wildhaus (CH); Gstach, Peter, 9494, Schaan (LI); Oberndorfer, Georg, 6800, Feldkirch (AT); Winkler, Bernhard, 6800, Feldkirch (AT)
(74) Vertreter: Hilti Aktiengesellschaft Corporate Intellectual Property

(56) Entgegenhaltungen:
- EP-B1- 0 697 071
- DE-A1- 19 852 338
- DE-A1-102005 017 596
- DE-A1-102007 023 735
- JP-A- 2008 256 093
- US-B1- 6 296 433

## Beschreibung

Die Erfindung betrifft ein Verfahren zur Verankerung eines Befestigungselementes in einem mineralischen Bauteil, der im Oberbegriff des Patentanspruchs 1 genannten Art.

Zur Verankerung eines Befestigungselementes in einem mineralischen Bauteil beziehungsweise Untergrund, z. B. aus Beton oder Mauerwerk, wird zuerst ein Bohrloch mit einem Bohrer, der einen Bohrernenndurchmesser aufweist, in dem Bauteil erstellt und anschliessend ein Befestigungselement in das erstellte Bohrloch eingeschraubt. Das Befestigungselement weist einen Schaft, der mit einem Drehangriffsmittel für ein Setzwerkzeug versehen ist und der einen Kerndurchmesser aufweist, sowie ein gewindefurchendes Gewinde auf, dessen Aussendurchmesser grösser als der Innendurchmesser des Bohrlochs ist.

Beim Einschrauben des Befestigungselementes in das Bohrloch furchen sich beziehungsweise drücken sich die Gewindegänge des Gewindes in die Bohrlochwandung des mineralischen Bauteils ein, so dass das Befestigungselement über den geschaffenen Hinterschnitt im Bohrloch zur Übertragung von Lasten verankert ist.

Das Befestigungselement ist beispielsweise als eine Schraube mit einem Sechskantkopf oder einem Innenvierkant als Drehangriffsmittel an einem Ende des Schafts ausgebildet. Alternativ ist das Befestigungselement z. B. eine Innengewindehülse mit einem innenliegenden Drehangriffsmittel, die an der Aussenseite des Schafts ein gewindefurchendes Gewinde aufweist.

In mineralischen Bauteilen beziehungsweise Untergründen sind die übertragbaren Schubkräfte deutlich kleiner als die übertragbaren Druckkräfte, weshalb Gewindeschneider für Metall für eine Anwendung in mineralischen Bauteilen ungeeignet sind. Gewindefurchende Befestigungselemente für mineralische Untergründe weisen ein Gewinde mit einer Differenz zwischen dem Aussendurchmesser des Gewindes und dem Kerndurchmesser des Schafts auf, die dem 0.05- bis 0.7-fachen der Steigung des Gewindes entspricht. Eine derartige gewindeformende Betonschraube als Befestigungselement für mineralische Bauteile ist beispielsweise aus der EP 0 697 071 B1 bekannt.

Die Ausgestaltung gattungsgemässer Befestigungselemente ist widersprüchlichen Anforderungen nach Setzbarkeit und Traglast unterworfen. Für die Setzbarkeit ist es vorteilhaft, wenn der Kerndurchmesser des Schafts klein gehalten wird. Für die Traglast ist es vorteilhaft, wenn der Kerndurchmesser des Schafts so gross wie möglich ausgebildet wird.

Mit zunehmender Bohrlochtiefe sowie mit zunehmender Abnutzung des Bohrers weist das erstellte Bohrloch einen wesentlich kleineren einbeschriebenen Bohrzylinder (EBZ) als der Bohrernenndurchmesser des verwendeten Bohrers auf. Der einbeschriebene Bohrzylinder (EBZ) ist der im Durchmesser grösste Kreiszylinder, der ohne weitere Hilfsmittel und somit ohne grossen Widerstand auf die vorgesehene Verankerungstiefe des Befestigungselementes in das mit dem Bohrer erstellte Bohrloch einführbar ist. Es wird daher beim Bohren oftmals ein für den Kerndurchmesser des Schafts zu enges beziehungsweise negative Achsabweichungen aufweisendes Bohrloch ausgebildet. Da das Befestigungselement sich nicht an den einbeschriebenen Bohrzylinder beziehungsweise an das negative Achsabweichungen aufweisende Bohrloch anpassen kann, ist das Befestigungselement nur erschwert oder gar nicht mehr setzbar.

Um das Einschneiden eines Gewindes in einem mineralischen Untergrund zu unterstützen und die Setzbarkeit eines gewindefurchenden Befestigungselementes für mineralische Bauteile auch bei einem teilweise verengten Bohrloch zu verbessern, ist aus der EP 0 560 789 B1 eine gewindeformende Betonschraube bekannt, die an einem ersten Endbereich des Schafts eine Schneidkante aufweist.

Nachteilig an der bekannten Lösung ist, dass trotz dem verbesserten Setzverhalten gegenüber einer herkömmlichen Betonschraube, wie sie beispielsweise aus der EP 0 697 071 B1 bekannt ist, die Traglast der Betonschraube gemäss der EP 0 560 789 B1 nicht erhöht ist.

Aus der EP 1 795 768 B1 ist ein gewindefurchendes Befestigungselement für mineralische Bauteile bekannt, das an seinem freien, in Setzrichtung gesehen, vorderen Ende vier Nuten zur Aufnahme des beim Furchen des Gegengewindes anfallenden Bohrmehls aufweist. Diese Nuten verhindern, dass das Bohrmehl den Zwischenraum zwischen der Bohrlochwand und dem Schaft zusetzt. Dadurch wird das Eindrehmoment zum Setzen des Befestigungselementes reduziert. Bei einem Bohrloch, das mit einem teilweise verschlissenen Bohrer erstellt wurde oder das eine grosse Bohrlochtiefe aufweist, wird die Setzbarkeit dieses gewindefurchenden Befestigungselementes durch die Nuten nicht verbessert. Bei diesem gewindefurchenden Befestigungselement erfolgt die Krafteinleitung im Wesentlichen über das zwischen der Bohrlochwandung und dem Schaft verpresste Bohrmehl. Es kann jedoch nicht gewährleistet werden, dass eine kontinuierliche Verpressung entlang der Mantelfläche des Bohrlochs auftritt und somit eine ideale Krafteinleitung in das Bauteil gegeben ist.

Die nächstkommende DE 10 2005 017 596 A1 lehrt eine gewindeschneidende Betonschraube, wobei das Verhältnis des Durchmessers des Gewindekerns der Betonschraube zu einem sogenannten "Bohrlochdurchmesser" etwa 0.95 betragen kann. Infolgedessen soll ein Zwischenraum zwischen dem Gewindekern und der Bohrlochwand bestehen.

Die JP 2008 256093 A beschreibt Betonschrauben mit Ausnehmungen zum Abführen von Spänen.

Weitere Schrauben gehen aus der DE 198 52 338 A1, der DE 10 2007 023 735 A1 und der US 6 296 433 B1 hervor.

Aufgabe der Erfindung ist es, ein Verfahren zur Verankerung eines gewindefurchenden Befestigungselementes für mineralische Bauteile beziehungsweise Untergründe zu schaffen, wobei das gesetzte Befestigungselement ein vorteilhaftes Trag- und Setzverhalten aufweist.

Die Aufgabe wird durch die Merkmale des Anspruchs 1 gelöst. Demgemäss ist vorgesehen, dass der Schaft des Befestigungselements an einem ersten Endbereich zumindest eine Schneidkante aufweist, und dass das Bohrloch unter Verwendung eines Bohrers mit einem Bohrernenndurchmesser, der dem 0.99- bis 1.08-fachen des Kerndurchmessers des Schafts entspricht, erstellt wird.

Unter dem Bohrernenndurchmesser wird in diesem Zusammenhang die Grössenbezeichnung des Bohrers verstanden (z. B. 6 mm, 8 mm, 10 mm, etc. beziehungsweise 1/4", 5/16", 3/8", etc.). Die Bohrerspitze, beispielsweise eine Schneidplatte des Bohrers weist bei einem Bohrer mit einem zum Bohrerschaft symmetrischen Bohrkopf eine Erstreckung auf, welche als Bohrereckmass bezeichnet wird. Bei einem Bohrer mit einem asymmetrischen Bohrkopf wird in diesem Zusammenhang der Durchmesser der Mantelfläche verstanden, die von diesem Bohrer erzeugt wird. Der Bohrernenndurchmesser und das zugehörige minimale sowie maximale Bohrereckmass ist z. B. in der Tabelle ETAG 001 (Guideline for European Technical Approval of Metal Anchors for use in Concrete) bei metrischen Grössen und in der Tabelle ACI 355.2-04 (American Concrete Institute) bei zölligen Grössen definiert.

Die zumindest eine am vollständigen Kerndurchmesser vorgesehene Schneidkante gewährleistet eine Anpassung des im Querschnitt unrunden beziehungsweise unebenen Bohrlochs zu einem im Wesentlichen zylindrischen Bohrloch, so dass nach dem Setzen des Befestigungselementes der Schaft mit seiner Aussenseite direkt an der Bohrlochwandung zu liegen kommt. Die unebene Mantelfläche des Bohrlochs wird beim Setzen des Befestigungselementes begradigt. Auch bei einem teilverschlissenen Bohrer, der einen wesentlich kleineren einbeschriebenen Bohrzylinder (EBZ) im Bauteil beziehungsweise im Untergrund ausbildet, ist die Setzbarkeit des Befestigungselementes aufgrund der zumindest einen Schneidkante weiterhin gewährleistet. Somit ist ein derartiges Befestigungselement auch in Bohrlöchern mit einem einbeschriebenen Bohrzylinder (EBZ) setzbar, der dem 0.83-bis 0.96-fachen des Bohrernenndurchmessers entspricht. Das gleiche gilt auch bei tiefen Bohrlöchern, welche ebenfalls einen im Verhältnis zum Bohrernenndurchmesser kleineren einbeschriebenen Bohrzylinder (EBZ) im Bauteil beziehungsweise im Untergrund aufweisen.

Mit dem erfindungsgemässen Verfahren wird gewährleistet, dass einerseits allfällige Freiräume weitgehend vollständig mit dem beim Gewindefurchen anfallenden Bohrmehl und/oder Bohrklein verfüllt werden und der Schaft über einen grossen Teil der Bohrlochwandung satt an dieser anliegt. Dadurch wird die Querdehnung des mineralischen Materials des Bauteils im Bereich des Bohrlochs behindert, was zu geänderten Spannungszuständen führt, welche ihrerseits zu einer deutlichen Erhöhung der Betonfestigkeiten im Bereich des das Bohrloch umgebenden Materials führen. Beim Setzen des Befestigungselementes wird nicht nur anfallendes Bohrmehl in den die zumindest eine Schneidkante ausbildenden Nut aufgenommen beziehungsweise vom Befestigungselement vorgeschoben, sondern gleichzeitig wird zwischen dem Schaft und der Bohrlochwandung vorhandenes Bohrmehl gleichförmig und stark, insbesondere im Bereich des gefurchten Gegengewindes verpresst.

Wird ein Bohrer mit einem Bohrernenndurchmesser verwendet, der kleiner als das 0.95-fache des Kerndurchmessers des Schafts ist, wird die Verpressung des zwischen dem Schaft und der Bohrlochwandung vorhandenen Bohrmehls zu gross, so dass die Reibung beim Setzvorgang derart zunimmt, dass das Befestigungselement nicht mehr setzbar ist.

Wird ein Bohrer mit einem Bohrernenndurchmesser verwendet, der grösser als das 1.10-fache des Kerndurchmessers des Schafts ist, kommt der Schaft des gesetzten Befestigungselementes nur mit einem geringen Bereich seiner Aussenseite mit der Bohrlochwandung in direkter Anlage beziehungsweise wird das zwischen dem Schaft und der Bohrlochwandung vorhandene Bohrmehls nur zu einem geringen Grad verpresst. Zwar wäre ein derartiges Befestigungselement einfach setzbar, aber dieses Befestigungselement würde eine vergleichsweise geringe Traglast aufweisen.

Erfindungsgemäss entspricht der Bohrernenndurchmesser dem 0.99- bis 1.08-fachen des Kerndurchmessers des Schafts, womit Befestigungselemente in den handelsüblichen Grössen vorteilhaft setzbar sind und im gesetzten Zustand ein besonders vorteilhaftes Tragverhalten aufweisen.

Es kann ein Befestigungselement für mineralische Bauteile beziehungsweise Untergründe vorgesehen sein, aufweisend einen Schaft, der ein Drehangriffsmittel für ein Setzwerkzeug aufweist, und ein gewindefurchendes Gewinde, dessen Differenz zwischen dem Aussendurchmesser des Gewindes und dem Kerndurchmesser des Schafts dem 0.05- bis 0.7-fachen der Steigung des Gewindes entspricht, wobei zumindest eine Schneidkante an einem ersten Endbereich des Schafts vorgesehen sind, und wobei die parallel zur Längsachse des Befestigungselementes und am vollständigen Kerndurchmesser gemessene Gesamtlänge der zumindest einen Schneidkante zumindest der Steigung des Gewindes entspricht.

Da die zumindest eine Schneidkante eine Länge aufweist, die grösser als die Steigung des Gewindes ist, wird beim Eindrehen des Befestigungselementes bei einer Drehung desselben über 360° um die Längsachse des Befestigungselementes die Bohrlochwandung umfänglich geglättet. Ein zu enges beziehungsweise negative Achsabweichungen aufweisendes Bohrloch wird partiell oder gegebenenfalls über die gesamte Längserstreckung vergrössert, wobei der Aufwand zum Setzen des Befestigungselementes gegenüber einem herkömmlichen gewindefurchenden Befestigungselement nur unwesentlich zunimmt. Massgebend dafür ist die Länge der zumindest einen Schneidkante am vollständigen Kerndurchmesser des Schafts, welche mindestens der Steigung eines Gewindes entspricht. Die Steigung des Gewindes entspricht dem Weg, der durch eine volle Umdrehung des Befestigungselementes zurückgelegt wird.

Ein Verklemmen des Befestigungselementes beim Setzen in einem Bohrloch mit negativen Achsabweichungen ist durch die abrasive Wirkung der zumindest einen Schneidkante weitgehend ausgeschlossen. Die Aussenseite des Schafts kommt über einen grossen Bereich mit der Bohrlochwandung satt in Anlage und im Bohrloch befindliches sowie beim Gewindefurchen anfallendes Bohrmehl und/oder Bohrklein wird im Bereich des gefurchten Gegengewindes ausreichend stark verpresst.

Vorzugsweise sind mehrere Schneidkanten am ersten Endbereich des Schafts vorgesehen, wobei die addierte, parallel zur Längsachse des Befestigungselementes und am vollständigen Kerndurchmesser gemessene Gesamtlänge der Schneidkanten (zumindest der Steigung des Gewindes entspricht. Die Länge der einzelnen Schneidkanten kann kürzer als bei der Anordnung von nur einer Schneidkante ausgebildet werden, wobei die entsprechende Länge dieser Schneidkanten nicht für alle Schneidkanten gleich sein muss. Massgebend für ein vorteilhaftes Setzverhalten des Befestigungselementes ist die Summe der einzelnen Längen der Schneidkanten am vollständigen Kerndurchmesser des Schafts, welche mindestens der Steigung eines Gewindes entspricht. Zudem gewährleisten mehrere, umfänglich zueinander beabstandete Schneidkanten ein vorteilhaftes Anschneidverhalten beim Ansetzen beziehungsweise Einschrauben des Befestigungselementes in das Bohrloch.

Vorteilhaft sind die Schneidkanten bezogen auf die Längsachse des Befestigungselementes rotationssymmetrisch angeordnet. Beim Ansetzen des Befestigungselementes kommen die zumindest zwei Schneidkanten mit dem Bohrlochmund in Anlage und gewährleisten zu Beginn sowie während des Setzvorgangs ein gutes Schneidverhalten, womit das Befestigungselement einfach setzbar ist.

Weiter vorteilhaft ist an dem ersten Endbereich des Schafts ein Einführabschnitt vorgesehen, der sich zum freien Ende des Schafts verjüngt. Die zumindest eine Schneidkante erstreckt sich vom Schaft ausgehend über den Einführabschnitt bis zum freien Ende des Schafts, wobei diese vorteilhaft zum freien Ende des Schafts ausläuft. Besonders vorteilhaft ist der Beginn des gewindefurchenden Gewindes bezogen auf das freie Ende des Schafts axial zurückversetzt, so dass die zumindest eine Schneidkante bezogen auf das Gewinde vorauseilend ausgebildet ist. Zu Beginn des Setzvorgangs bereitet die zumindest eine Schneidkante den Bohrlochmund vor, so dass bei Anlage des gewindefurchenden Gewindes am Bohrlochmund sich dieses leicht in den Untergrund furchen lässt.

Sind mehrere Schneidkanten am ersten Endbereich des Schafts vorgesehen, erstrecken sich zumindest einzelne und vorteilhaft alle dieser Schneidkanten über den Einführabschnitt, womit das Anschneidverhalten des Befestigungselementes weiter verbessert wird. Die Summe der axialen Längen der Schneidkanten gemessen am vollständigen Kerndurchmesser, d. h. ohne die Längen der Schneidkanten am Einführabschnitt, entspricht auch hier zumindest dem Mass der Steigung des Gewindes. Sind die Schneidkanten Abschnitte von im Kern des Schafts ausgebildeten Nuten, verläuft der Nutengrund zumindest im Bereich des sich verjüngenden Einführabschnitts vorteilhaft parallel zu der Längsachse des Schaftes.

Bevorzugt verläuft die zumindest eine Schneidkante, beziehungsweise bei mehreren Schneidkanten, zumindest eine der Schneidkanten zumindest bereichsweise normal zur Steigung beziehungsweise zu einem Gewindegang des Gewindes, was ein vorteilhaftes Schneidverhalten beim Setzen des Befestigungselementes gewährleistet. Somit verläuft die zumindest eine Schneidkante zumindest bereichsweise geneigt zu einer Projektion der Längsachse. Zur Bestimmung der Länge einer zur Projektion der Längsachse geneigten Schneidkante wird deren auf die Längsachse projizierte Länge betrachtet. Beim Setzvorgang wirkt, jeweils bezogen auf die Längsachse des Befestigungselementes, neben einer hauptsächlich in radialer Richtung wirkenden Bearbeitung der Bohrlochwandung zusätzlich auch eine axiale Kraftkomponente.

Insbesondere bei einem drehenden und schlagenden Setzen des Befestigungselementes, beispielsweise mit einem Tangentialschlagschrauber, ist das Setzverhalten durch die zumindest eine, bereichsweise geneigte Schneidkante verbessert. Ausserdem wird durch die zumindest eine geneigte Schneidkante die Bohrmehlabfuhr unterstützt, da das anfallende Bohrklein und/oder Bohrmehl in Richtung des ersten Endes des Schafts geschoben wird.

Alternativ zu zumindest einer Schneidkante, die zumindest bereichsweise normal zur Steigung des Gewindes verläuft, kann diese auch in einem Winkel von -30° bis +30°, besonders vorteilhaft von -15° bis +15° zu dieser Normalen verlaufen.

Vorteilhaft weist die Ausrichtung der zumindest einen Schneidkante in Bezug zur Längsachse des Befestigungselementes einen diskontinuierlichen Verlauf auf. Besonders vorteilhaft weist die zumindest eine Schneidkante einen achsparallel verlaufenden Abschnitt sowie einen geneigt zur Projektion der Längsachse verlaufenden Abschnitt auf. Durch die Wahl der wirksamen Länge der einzelnen Abschnitte lässt sich das Setzverhalten entsprechend der Anforderung beziehungsweise der gewünschten Performance des Befestigungselementes beeinflussen.

Die Schneidkontur der zumindest einen Schneidkante kann das Abbauverhalten zusätzlich beeinflussen. Neben einem glatten Verlauf kann die zumindest eine Schneidkante beispielsweise auch gezahnt oder gewellt ausgebildet sein. Sind mehrere Schneidkanten an einem Befestigungselement vorgesehen, können diese den gleichen Verlauf oder jeweils unterschiedliche Verläufe aufweisen.

Bevorzugt überragt die zumindest eine Schneidkante radial die Axialprojektion des Kerndurchmessers des Schafts, wodurch bei einem vorteilhaften Abbauverhalten die Reibung zwischen dem Kerndurchmesser des Schafts und der Bohrlochwandung weiter minimiert wird.

Vorzugsweise weist der Schaft im ersten Endbereich zumindest im Bereich der zumindest einen Schneidkante einen gegenüber dem übrigen Kerndurchmesser des Schafts grösseren Kerndurchmesser auf, womit im Wesentlichen in diesem Bereich der grösste Anteil der Reibung zwischen dem Kerndurchmesser des Schafts und der Bohrlochwandung anfällt. Der im Durchmesser vergrösserte Bereich des Kerndurchmessers ist beispielsweise zylindrisch, tonnenförmig oder kegelstumpfförmig ausgebildet und wird z. B. durch Aufstauchen oder beim Walzen des Schaftes bei der Fertigung des Befestigungselementes ausgebildet.

Bevorzugt ist zwischen der zumindest einen Schneidkante und dem Schaft ein Freiwinkel vorgesehen, um einen ausreichenden Freiraum für anfallendes Bohrmehl und Bohrklein zu schaffen. Vorzugsweise beträgt der Freiwinkel 1° bis 30°, besonders vorteilhaft 5° bis 20°, bezogen auf eine an den Kerndurchmesser des Schafts angelegte Tangente.

Bevorzugt weist die zumindest eine Schneidkante einen negativen Spanwinkel auf, der ein vorteilhaftes Abbauverhalten in spröden Materialien sicherstellt, wie sie mineralische Untergründe und insbesondere Beton darstellen. Vorzugsweise beträgt der negative Spanwinkel 1° bis 30°, besonders vorteilhaft 3° bis 10°.

Vorteilhaft ist benachbart zu der zumindest einen Schneidkante, radial innenliegend eine Abführnut vorgesehen. Weist das Befestigungselement mehrere Schneidkanten auf, so ist besonders vorteilhaft bei jeder Schneidkante eine Abführnut vorgesehen, so dass ein ausreichendes Volumen zur Abfuhr des beim Setzvorgang anfallenden Bohrmehls beziehungsweise Bohrkleins zur Verfügung steht. Vorteilhaft ist die Nut beziehungsweise sind die Nuten derart an dem Schaft angeordnet und ausgebildet, dass beim Setzen des Befestigungselementes das abgeführte Bohrmehl und Bohrklein zum freien Ende des Schafts gefördert und somit vor dem gesetzten Befestigungselementes in Richtung des Bohrlochgrunds abgelagert wird.

Weiter vorteilhaft ist die zumindest eine Schneidkante mit einer Fase versehen, womit der Verschleiss der Schneidkante beim Setzvorgang reduziert wird. Der Fasenwinkel beträgt vorzugsweise 1° bis 30°, vorteilhaft 5° bis 15°. Die Breite der Fase beträgt vorzugsweise 0.05 mm bis 1 mm, vorteilhaft 0.2 mm bis 0.5 mm. Die Hinterstellung der Fase, unter welcher in diesem Zusammenhang der im Wesentlichen parallel zu dem radialen Querschnitt des Schafts verlaufende Abschnitt der Fase verstanden wird, beträgt 0.1 mm bis 5 mm, besonders vorteilhaft 0.5 mm bis 3 mm. Unter Fase wird in diesem Zusammenhang auch eine abgerundete Schneidkante verstanden, deren Radius vorzugsweise 0.02 mm bis 1 mm, vorteilhaft 0.05 mm bis 0.5 mm beträgt. Sind mehrere Schneidkanten an einem Befestigungselement vorgesehen, können diese jeweils alle mit einer Fase versehen sein, wobei die Fase jeweils gleichartig oder jeweils unterschiedlich ausgebildet sein kann.

Bevorzugt weist die zumindest eine Schneidkante zumindest bereichsweise einen Abschnitt mit einer gegenüber dem Schaft grösseren Härte auf, wodurch das Abbauverhalten verbessert und der Verschleiss der Schneidkante wesentlich reduziert wird. Insbesondere bei einem Befestigungselement aus einem rostfreien Stahl reicht die Härte des Schaftmaterials üblicherweise nicht für ein Furchen des Gewindes und somit auch nicht für ein Aufweiten des Bohrlochs im mineralischen Untergrund aus. Beispielsweise werden Schneidelemente aus hartem oder gehärtetem Material an der zumindest einen Schneidkante auf- beziehungsweise eingebracht.

Die Erfindung wird nachstehend anhand von Ausführungsbeispielen näher erläutert. Es zeigen:
- Fig. 1: Ein Bohrer in Seitenansicht;
- Fig. 2: ein Befestigungselement als gewindefurchende Schraube in Seitenansicht;
- Fig. 3: eine Detailansicht des vorderen Endes der in Fig. 1 gezeigten Schraube in vergrösserter Darstellung;
- Fig. 4: einen Querschnitt durch das vordere Ende gem. Linie III-III in Fig. 3;
- Fig. 5: eine Schneidkante in einem Ausschnitt der Fig. 4;
- Fig. 6: ein mit dem Bohrer gem. Fig. 1 erstelltes Bohrloch;
- Fig. 7: das in Fig. 2 gezeigte Befestigungselement im gesetzten Zustand;
- Fig. 8: eine perspektivische Detailansicht des vorderen Endes eines zweiten Ausführungsbeispiels eines Befestigungselements;
- Fig. 9: eine perspektivische Detailansicht des vorderen Endes eines dritten Ausführungsbeispiels eines Befestigungselements;
- Fig. 10: eine perspektivische Detailansicht des vorderen Endes eines vierten Ausführungsbeispiels eines Befestigungselements;
- Fig. 11: eine Detailansicht des vorderen Endes eines fünften Ausführungsbeispiels eines Befestigungselements;
- Fig. 12: eine Detailansicht des vorderen Endes eines sechsten Ausführungsbeispiels eines Befestigungselements; und
- Fig. 13: ein weiteres Befestigungselement als gewindefurchende Innengewindehülse in Seitenansicht.

Grundsätzlich sind in den Figuren gleiche Teile mit den gleichen Bezugszeichen versehen.

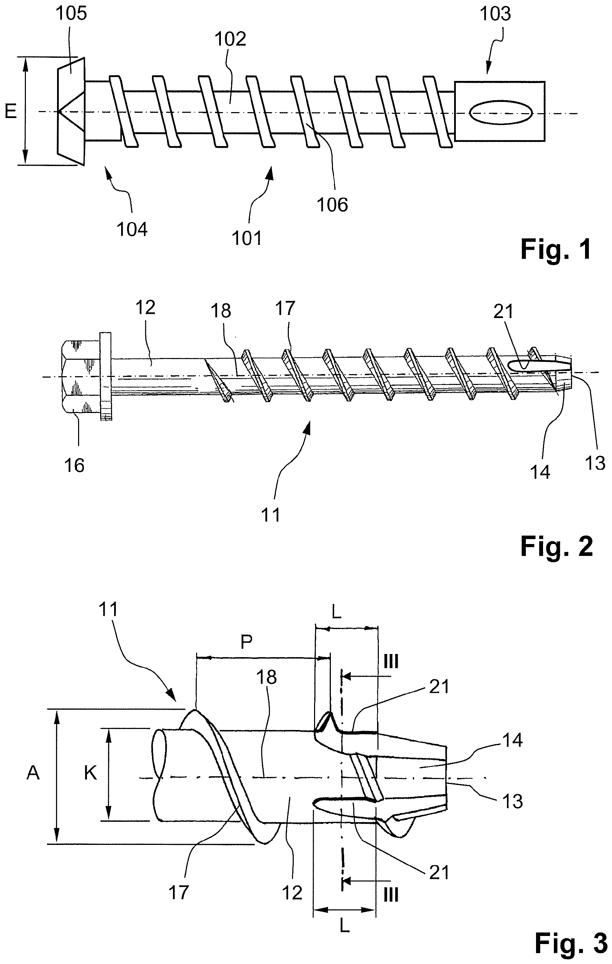

In der Figur 1 ist ein Bohrer 101 gezeigt, der einen Bohrerschaft 102 und einen Bohrernenndurchmesser aufweist. An einem Ende ist der Bohrerschaft 102 mit einem Einsteckende 103 zur Anordnung des Bohrers 101 in einem hier nicht dargestellten Bohrgerät versehen. Am anderen Ende des Bohrerschafts 102 ist ein Bohrkopf 104 angeordnet, der ein plattenförmiges Schneidelement 105 aufweist. Die Quererstreckung des Schneidelementes 105 definiert das Bohrereckmass E des Bohrers 101. Zwischen dem Bohrerkopf 104 und dem Einsteckende 103 erstreckt sich eine Förderwendel 106 entlang des Bohrerschafts 102 zur Förderung des beim Bohren anfallenden Bohrmehls und/oder Bohrkleins aus dem Bohrloch 2.

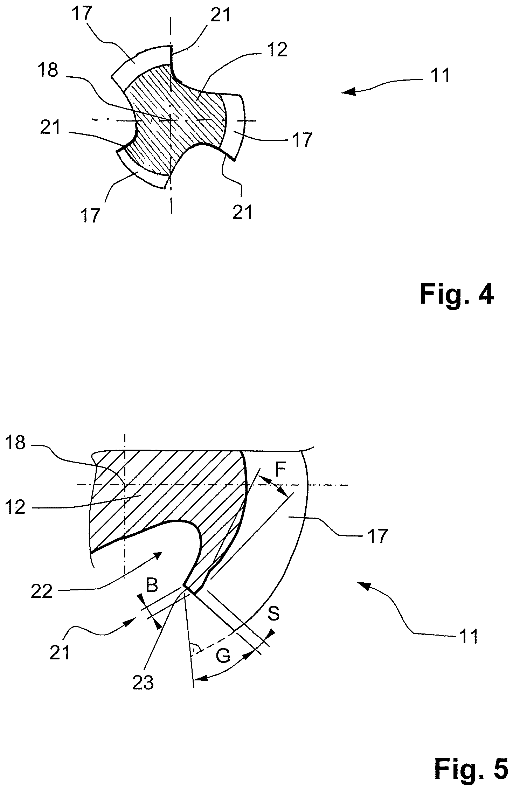

Das in den Figuren 2 bis 5 dargestellte Befestigungselement 11 für mineralische Bauteile, z. B. aus Beton oder Mauerwerk, ist eine selbstfurchende Schraube mit einem zylindrischen Schaft 12. Der Schaft 12 weist an einem ersten freien Ende 13 einen sich zum freien Ende 13 des Schafts 12 verjüngenden Einführabschnitt 14 und an einem zweiten Ende 15 einen Sechskantkopf als Drehangriffsmittel 16 für ein hier nicht dargestelltes Setzwerkzeug auf. Ausgehend von einem Endbereich des ersten Endes 13 erstreckt sich bereichsweise entlang des Schafts 12 ein gewindefurchendes Gewinde 17. Der Schaft 12 definiert die Längsachse 18 des Befestigungselementes 11.

Die Differenz zwischen dem Aussendurchmesser A des Gewindes 17 und dem Kerndurchmesser K des Schafts 12 entspricht dem 0.05- bis 0.7-fachen der Steigung P des Gewindes 17. Der Aussendurchmesser A des Gewindes 17 entspricht dem 1.1- bis 1.5-fachen des Kerndurchmessers K des Schafts 12. Der Aussendurchmesser A des Gewindes 17 entspricht zudem dem 1.0- bis 2.5-fachen der Steigung P des Gewindes 17 und insbesondere bei kleineren Befestigungselementen mit einem Kerndurchmesser vom z. B. 6 mm bis 14 mm vorteilhaft dem 1.03- bis 1.99-fachen der Steigung P des Gewindes 17. Bei einem zwei-gängigen Gewinde entspricht der Aussendurchmesser des Gewindes vorteilhaft dem 0.5- bis 1.25-fachen der Steigung der einzelnen Gewindegänge. Weist das Gewinde des Befestigungselementes mehr als zwei Gewindegänge auf, so entspricht der Aussendurchmesser dieses Gewindes dem (1.0- bis 2.5-fachen der Steigung des Gewindes) durch die Anzahl der Gewindegänge.

Der vollständige Kerndurchmesser K ist der die Mantelfläche des Schafts 12 definierende Durchmesser, von der das gewindefurchende Gewinde 17 abragt. Etwaige Vertiefungen oder Nuten, die an der Schaftaussenseite, zwischen den Gewindegängen des Gewindes vorgesehen sind, werden in diesem Zusammenhang bei der Bestimmung des vollständigen Kerndurchmessers K des Schafts 12 nicht berücksichtigt.

Am ersten Endbereich des Schafts 12 sind drei Schneidkanten 21 vorgesehen, wobei jede Schneidkante 21 eine parallel zur Längsachse 18 des Befestigungselementes 11 verlaufende, für die Begradigung des Bohrlochs im Wesentlichen wirksame Länge L aufweist. Die addierte, parallel zur Längsachse 18, am vollständigen Kerndurchmesser K gemessene Gesamtlänge der Schneidkanten 21 entspricht zumindest der Steigung P des Gewindes 17. Die Schneidkanten 21 sind bezogen auf die Längsachse 18 des Befestigungselementes 11 punktsymmetrisch angeordnet und erstrecken sich vom Schaft 12 ausgehend über den Einführabschnitt 14 bis zum freien Ende 13 des Schafts 12. Die Schneidkanten 21 weisen jeweils eine Schneidkontur auf und überragen radial die Axialprojektion des Kerndurchmessers K des Schafts 12.

Zwischen den Schneidkanten 21 und dem Schaft 12 ist jeweils ein Freiwinkel F vorgesehen, der in diesem Beispiel 10° beträgt. Zudem weisen die Schneidkanten 21 hier jeweils einen negativen Spanwinkel von 5° auf.

Benachbart zu jeder Schneidkante 21 ist radial innenliegend eine Abführnut 22 zum Abführen des beim Setzen anfallenden Bohrmehls bzw. Bohrkleins vorgesehen. Die Schneidkanten 21 sind vorteilhaft zumindest bereichsweise mit einem Abschnitt mit einer gegenüber dem Schaft grösseren Härte und mit einer Fase 23 versehen. In diesem Ausführungsbeispiel beträgt der Fasenwinkel C 10°, die Fasenbreite B 0.4 mm und die Hinterstellung der Fase 1 mm.

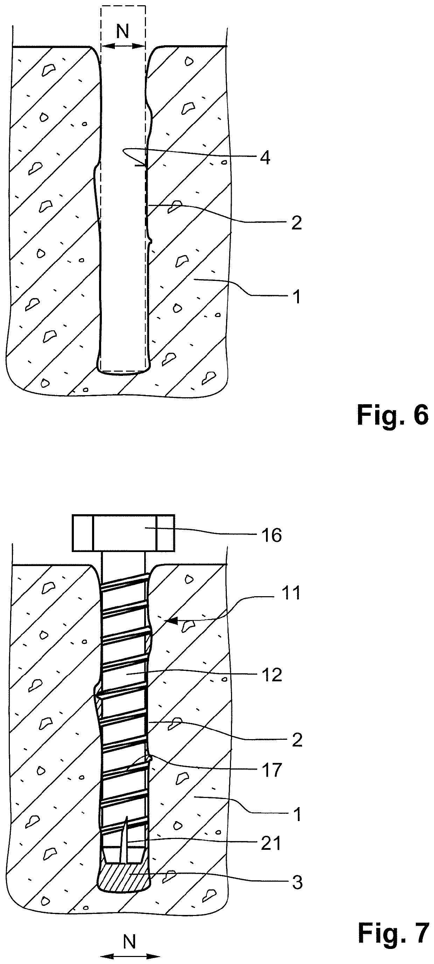

Anhand der Figuren 6 und 7 wird nachfolgend das Verfahren zum Setzen des gewindefurchenden Befestigungselementes 11 im mineralischen Bauteil 1 beschrieben, wobei der Setzvorgang für die anderen, nachfolgend beschriebenen Befestigungselemente im Wesentlichen gleich ist. Zuerst wird mit dem Bohrer 101 ein Bohrloch 2 in das Bauteil 1 gebohrt. Aufgrund der Bohrlochtiefe und/oder dem Verschleissgrad des Bohrers 101 weist das erstellte Bohrloch einen einbeschriebenen Bohrzylinder (EBZ) auf, der einen kleineren Durchmesser N als der Bohrernenndurchmesser des Bohrers 101 aufweist.

Anschliessend wird das gewindefurchende Befestigungselement 11 in das Bohrloch 2 drehend oder drehschlagend eingetrieben. Die am vorderen Endbereich des Schafts 12 angeordneten Schneidkanten 21 glätten beim Einschrauben des Befestigungselementes 11 das unrunde beziehungsweise die unebene Mantelfläche 4 des Bohrlochs 2. Im gesetzten Zustand des Befestigungselementes 11 (siehe Fig. 7) liegt der grösste im Bohrloch befindliche Anteil der Aussenseite beziehungsweise die Mantelfläche des Schafts 12 an der Mantelfläche 4 des Bohrlochs 2 an. Im Bereich des gefurchten Gegengewindes ist das sich zwischen dem Schaft 12 und der Mantelfläche 4 des Bohrlochs 2 befindliche Bohrmehl und/oder Bohrklein stark verpresst.

Optional wird das Bohrloch 2 vor dem Eintreiben des Befestigungselementes 11 z. B. mit einer Luftpumpe gereinigt und dann das Bohrloch 2 mit einer bestimmte Menge einer aushärtbaren Masse 3 befüllt. Beim anschliessenden Eintreiben des Befestigungselementes 11 wird die aushärtbare Masse 3 im Bohrloch 2 verteilt. Das beim Setzen abgebaute mineralische Bohrmehl und/oder Bohrklein vermischt sich dabei mit der aushärtbaren Masse 3, womit hohe Lasten von der ausgehärteten Masse 3 übertragbar sind.

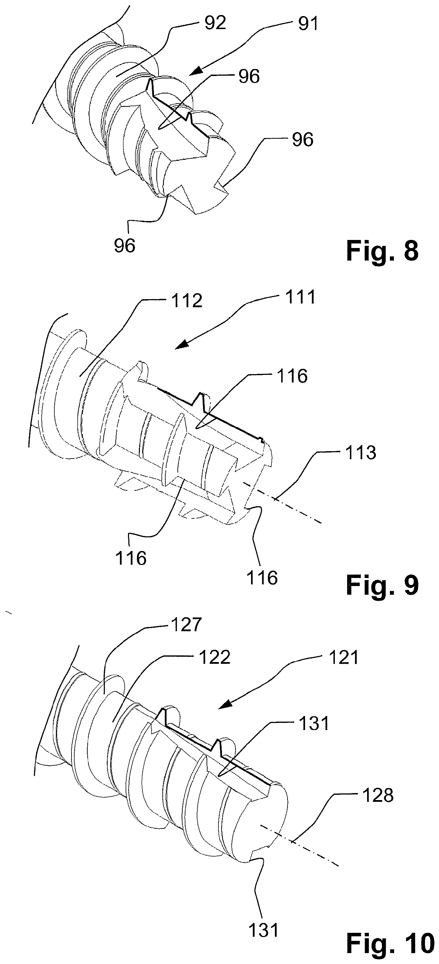

In Fig. 8 ist eine zweite Ausführungsform eines gewindefurchenden Befestigungselementes 91 mit einer alternativ ausgebildeten Schneidkante 96 gezeigt, die Teil einer V-förmigen, nach radial aussen offenen Nut ist. An diesem Befestigungselement 91 sind drei Schneidkante 96 rotationssymmetrisch am Schaft 92 vorgesehen, die ausgehend von dessen freien Ende verlaufen.

In Fig. 9 ist eine dritte Ausführungsform eines gewindefurchenden Befestigungselementes 111 mit einer alternativ ausgebildeten Schneidkante 106 gezeigt, die Teil einer U-förmigen, nach radial aussen offenen Nut ausgebildet ist. An diesem Befestigungselement 91 sind drei Schneidkanten 106 am Schaft 112 ausgehend von dessen freien Ende vorgesehen. Die Nuten sind hier in Bezug auf eine Projektion die Längsachse 113 des Befestigungselementes 111 zentrisch angeordnet.

In Fig. 10 ist eine vierte Ausführungsform eines gewindefurchenden Befestigungselementes 121 mit einer zwei einander diametral gegenüberliegenden Schneidkanten 131 gezeigt, die jeweils ein Teil einer U-förmigen, nach radial aussen offenen Nut sind. Die Nuten sind hier in Bezug auf eine Projektion die Längsachse 113 des Befestigungselementes 111 versetzt angeordnet. Die Schneidkanten 131 verlaufen in Bezug auf den Gewindegang des Gewindes 127 normal.

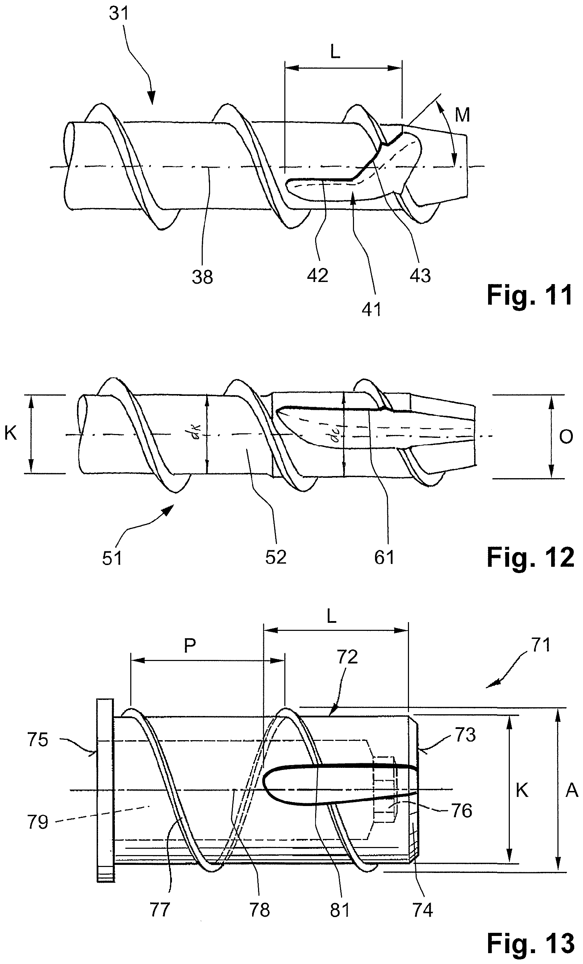

In Fig. 11 ist eine fünfte Ausführungsform eines gewindefurchenden Befestigungselementes 31 mit einer alternativ ausgebildeten Schneidkante 41 gezeigt, deren Ausrichtung in Bezug auf die Längsachse 38 des Befestigungselementes 31 einen diskontinuierlichen Verlauf aufweist. Die Schneidkante 41 weist einen im Wesentlichen achsparallel zur Längsachse 38 des Befestigungselementes 31 verlaufenden ersten Abschnitt 42 und einen geneigt zu einer Projektion der Längsachse 38 verlaufenden zweiten Abschnitt 43 auf. Der Winkel M des zweiten Abschnitts 43 zur Projektion der Längsachse 38 beträgt 20°.

In der Figur 12 ist ein gewindefurchendes Befestigungselement 51 mit einem Schaft 52 gezeigt, der im ersten Endbereich zumindest im Bereich der Schneidkanten 61 einen gegenüber dem übrigen Kerndurchmesser K des Schafts 52 grösseren Kerndurchmesser O aufweist.

In der Figur 13 ist als gewindefurchendes Befestigungselement 71 für mineralische Bauteile eine selbstfurchende Innengewindehülse mit einem zylindrischen Schaft 72 dargestellt. Der Schaft 72 weist an einem ersten freien Ende 73 einen sich zum freien Ende 73 des Schafts 12 verjüngenden Einführabschnitt 74 sowie eine von einem zweiten Ende 75 des Schafts 72 ausgehende Bohrung 79 mit einem Innengewinde auf. Am Grund der Bohrung 79 ist eine Mehrkantaufnahme als Drehangriffsmittel 76 für ein hier nicht dargestelltes Setzwerkzeug vorgesehen. Ausgehend von einem Endbereich des ersten Endes 73 erstreckt sich bereichsweise entlang des Schafts 72 ein gewindefurchendes Gewinde 77, wobei die Differenz zwischen dem Aussendurchmesser A des Gewindes 77 und dem Kerndurchmesser K des Schafts 72 dem 0.05- bis 0.7-fachen der Steigung P des Gewindes 77 entspricht. Der Schaft 72 definiert die Längsachse 78 des Befestigungselementes 71. Am ersten Endbereich des Schafts 72 ist eine der zumindest zwei Schneidkanten 81 dargestellt, die jeweils eine parallel zur Längsachse 78 des Befestigungselementes 71 verlaufende Länge L aufweisen. Deren addierte, parallel zur Längsachse 78 des Befestigungselementes 71 verlaufende Gesamtlänge entspricht zumindest der Steigung P des Gewindes 77.

## Patentansprüche

1. Verfahren zur Verankerung eines Befestigungselementes (11; 31; 51; 71; 91; 111; 121) in einem mineralischen Bauteil (1) bei dem ein Bohrloch (2) mit einem Bohrer (101), der einen Bohrernenndurchmesser aufweist, in dem Bauteil (1) erstellt und
anschliessend ein Befestigungselement (11; 31; 51; 71; 91; 111; 121) in das erstellte Bohrloch (2) eingeschraubt wird, wobei
das Befestigungselement (11; 31; 51; 71; 91; 111; 121) einen Schaft (12; 52; 72; 92; 112; 122), der mit einem Drehangriffsmittel (16; 76) für ein Setzwerkzeug versehen ist und der einen Kerndurchmesser (K) aufweist, und ein gewindefurchendes Gewinde (17; 77; 127) aufweist, dessen Differenz zwischen dem Aussendurchmesser (A) des Gewindes (17; 77; 127) und dem Kerndurchmesser (K) des Schafts (12; 52; 72; 92; 112; 122) dem 0.05-bis 0.7-fachen der Steigung (P) des Gewindes (17; 77; 127) entspricht, **dadurch gekennzeichnet, dass**
der Schaft (12; 52; 72; 92; 112; 122) des Befestigungselements (11; 31; 51; 71; 91; 111; 121) an einem ersten Endbereich zumindest eine Schneidkante (21; 41; 61; 81; 96; 116; 131) aufweist, und
dass das Bohrloch (2) unter Verwendung eines Bohrers (101) mit einem Bohrernenndurchmesser, der dem 0.99- bis 1.08-fachen des Kerndurchmessers (K) des Schafts (12; 52; 72; 92; 112; 122) entspricht, erstellt wird.

## Claims

1. Method of anchoring a fastening element (11; 31; 51; 71; 91; 111; 121) in a mineral component (1), in which a drill hole (2) is produced in the component (1) by a drill bit (101) having a nominal drill bit diameter and
then a fastening element (11; 31; 51; 71; 91; 111; 121) is screwed into the drill hole (2) produced, wherein
the fastening element (11; 31; 51; 71; 91; 111; 121) comprises a shank (12; 52; 72; 92; 112; 122) provided with a rotary engagement means (16; 76) for a setting tool and having a core diameter (K), and comprises a self-tapping thread (17; 77, 127) in which the difference between the external diameter (A) of the thread (17; 77; 127) and the core diameter (K) of the shank (12; 52; 72; 92; 112; 122) corresponds to 0.05 to 0.7 times the pitch (P) of the thread (17; 77; 127), **characterised in that**
the shank (12; 52; 72; 92; 112; 122) of the fastening element (11; 31; 51; 71; 91; 111; 121) is provided at a first end region with at least one cutting edge (21; 41; 61; 81; 96; 116; 131) and
that the drill hole (2) is produced using a drill bit (101) having a nominal drill bit diameter corresponding to 0.99 to 1.08 times the core diameter (K) of the shank (12; 52; 72; 92; 112; 122).

## Revendications

1. Procédé pour ancrer un élément de fixation (11 ; 31 ; 51 ; 71 ; 91 ; 111 ; 121) dans un composant minéral (1), dans lequel un trou percé (2) est réalisé dans le composant (1) avec un foret (101) ayant un diamètre nominal de foret,
et un élément de fixation (11 ; 31 ; 51 ; 71 ; 91 ; 111 ; 121) est ensuite vissé dans le trou percé (2) réalisé,
dans lequel l'élément de fixation (11 ; 31 ; 51 ; 71 ; 91 ; 111 ; 121) comporte une tige (12 ; 52 ; 72 ; 92 ; 112 ; 122) qui est munie de moyens de mise en rotation (16 ; 76) pour un outil de pose et ayant un diamètre de coeur (K), et un filetage taraudé (17 ; 77 ; 127) dont la différence entre le diamètre extérieur (A) du filetage (17 ; 77 ; 127) et le diamètre de coeur (K) de la tige (12 ; 52 ; 72 ; 92 ; 112 ; 122) correspond à 0,05 à 0,7 fois l'inclinaison (P) du filetage (17 ; 77 ; 127), **caractérisé en ce que**
la tige (12 ; 52 ; 72 ; 92 ; 112 ; 122) de l'élément de fixation (11 ; 31 ; 51 ; 71 ; 91 ; 111 ; 121) comporte, sur une première zone d'extrémité, au moins une arête tranchante (21 ; 41 ; 61 ; 81 ; 96 ; 116 ; 131), et
**en ce que** le trou percé (2) est réalisé en utilisant un foret (101) ayant un diamètre nominal de foret qui correspond à 0,99 à 1,08 fois le diamètre de coeur (K) de la tige (12 ; 52 ; 72 ; 92 ; 112 ; 122).
